(19) Europäisches Patentamt
European Patent Office
Office européen des brevets

(11) **EP 4 520 489 A1**

(12) **EUROPEAN PATENT APPLICATION**
published in accordance with Art. 153(4) EPC

(43) Date of publication:
**12.03.2025 Bulletin 2025/11**

(21) Application number: **23819851.9**

(22) Date of filing: **06.06.2023**

(51) International Patent Classification (IPC):
**B25J 13/00** (2006.01)

(52) Cooperative Patent Classification (CPC):
**B25J 13/00**

(86) International application number:
**PCT/JP2023/021043**

(87) International publication number:
**WO 2023/238871 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.06.2022 JP 2022093862**

(71) Applicant: **KAWASAKI JUKOGYO KABUSHIKI KAISHA**
**Kobe-shi, Hyogo 650-8670 (JP)**

(72) Inventors:
• **FUJII, Yusuke**
  **Kobe-shi, Hyogo 650-8670 (JP)**
• **OKUNO, Junichi**
  **Kobe-shi, Hyogo 650-8670 (JP)**
• **TANABE, Masataka**
  **Kobe-shi, Hyogo 650-8670 (JP)**

(74) Representative: **Müller-Boré & Partner**
**Patentanwälte PartG mbB**
**Friedenheimer Brücke 21**
**80639 München (DE)**

(54) **DEFLECTION AMOUNT ESTIMATION DEVICE, ROBOT CONTROL DEVICE, AND DEFLECTION AMOUNT METHOD**

(57) A deflection amount estimation device includes an opening angle calculation unit (25) configured to calculate an opening angle (θ) that is an angle formed by one link (31) of a two-degree-of-freedom link structure portion (11) including a plurality of rotation pairs and pivoting about a reference axis as an axis of one rotation pair of the link structure portion, and another link (32) of the link structure portion (11) pivoting about the reference axis; a load calculation unit (26) configured to calculate a load subjected to the link structure portion (11); a stiffness matrix determination unit (27) configured to determine, by using a stiffness value decision function representing a correlation between a stiffness value, which is a value of each of components of a stiffness matrix that associates the load with the deflection amount (δ), and the opening angle (θ), the stiffness value corresponding to the opening angle (θ); and a deflection amount calculation unit (28) configured to calculate the deflection amount (δ) of the link structure portion (11) based on the load and the stiffness matrix having the stiffness values determined by the stiffness matrix determination unit (27) as the components.

FIG. 2

EP 4 520 489 A1

## Description

TECHNICAL FIELD

The present invention relates to a deflection amount estimation device, a robot control device, and a deflection amount estimation method.

BACKGROUND ART

In the related art, for example, Patent Literature 1 proposes a deflection amount estimation device that calculates a deflection amount of a link structure portion in a robot arm including the link structure portion. The deflection amount estimation device described in Patent Literature 1 calculates the deflection amount that is estimated based on a swing angle of a four-bar link structure portion. Accordingly, it is possible to quickly estimate the deflection amount of the four-bar link structure portion, and thus it is possible to achieve speed up for a decrease in cycle time or the like and weight reduction of the link of the arm.

CITATION LIST

PATENT LITERATURE

Patent Literature 1: JP2019-195892A

SUMMARY OF INVENTION

TECHNICAL PROBLEM

However, the deflection amount estimation device described in Patent Literature 1 estimates the deflection amount of the link structure portion in which the movement of the link structure portion can be defined based on an attitude of one link. Therefore, the deflection amount estimation device described in Patent Literature 1 cannot be applied to a two-degree-of-freedom link structure in which the movement of the link structure portion cannot be defined based on an attitude of one link, and there is a limit in dealing with the speed up and the weight reduction of the link of the arm.

SOLUTION TO PROBLEM

In order to solve the above problem, a deflection amount estimation device according to one aspect of the present invention is a deflection amount estimation device for estimating a deflection amount of a two-degree-of-freedom link structure portion including a plurality of rotation pairs of a robot arm in which a plurality of links including the link structure portion are connected by joints. The deflection amount estimation device includes an opening angle calculation unit configured to calculate an opening angle that is an angle formed by one link of the link structure portion pivoting about a reference axis which is an axis of one rotation pair of the link structure portion, and another link of the link structure portion pivoting about the reference axis; a load calculation unit configured to calculate a load to which the link structure portion receives; a stiffness matrix determination unit configured to determine, by using a stiffness value decision function representing a correlation between a stiffness value and the opening angle of the link structure portion, the stiffness value corresponding to the opening angle of the link structure portion calculated by the opening angle calculation unit, the stiffness value being a value of each of components of a stiffness matrix that associates the load to which the link structure portion receives with the deflection amount of the link structure portion; and a deflection amount calculation unit configured to calculate the deflection amount of the link structure portion based on the load which is calculated by the load calculation unit and to which the link structure portion receives, and the stiffness matrix having the stiffness values determined by the stiffness matrix determination unit as the components.

According to the above configuration, it is possible to estimate the deflection amount of the two-degree-of-freedom link structure portion. In addition, since the link structure portion can have a plurality of degrees of freedom, a structure of the robot arm on a distal end side of the link structure portion can be simplified. Further, the deflection amount of the link structure portion can be quickly estimated by using the stiffness matrix having the stiffness value determined based on the opening angle as the component. Accordingly, a calculation amount in the calculation of the deflection amount can be reduced, and the deflection amount can be quickly calculated.

ADVANTAGEOUS EFFECTS OF INVENTION

The present invention has an effect that the deflection amount of the two-degree-of-freedom link structure portion can be estimated.

BRIEF DESCRIPTION OF DRAWINGS

[FIG. 1] FIG. 1 is a diagram showing a configuration example of a robot system including a deflection amount estimation device according to an embodiment;

[FIG. 2] FIG. 2 is a diagram schematically showing a configuration example of a robot body of the robot system in FIG. 1;

[FIG. 3] FIG. 3 is a diagram schematically showing an operation example of the robot body of the robot system in FIG. 1, and is a diagram showing a pivoting operation of a first drive link;

[FIG. 4] FIG. 4 is a diagram schematically showing an operation example of the robot body of the robot system in FIG. 1, and is a diagram showing a pivoting operation of the second drive link;

[FIG. 5] FIG. 5 is a block diagram schematically showing a configuration example of a control system of the robot system in FIG. 1;

[FIG. 6] FIG. 6 is a flowchart showing an operation example related to a deflection amount estimation operation of the robot system in FIG. 1;

[FIG. 7] FIG. 7 is a diagram showing an example of a stiffness value decision function used in the deflection amount estimation operation of the robot system in FIG. 1;

[FIG. 8] FIG. 8 is a diagram showing an example of the stiffness value decision function used in the deflection amount estimation operation of the robot system in FIG. 1; and

[FIG. 9] FIG. 9 is a diagram showing a modification of the robot body shown in FIG. 2.

DESCRIPTION OF EMBODIMENTS

Hereinafter, an embodiment will be described with reference to the drawings. The present invention is not limited to the embodiment. Further, in the following description, the same or corresponding elements are denoted by the same reference numerals through all the drawings, and redundant descriptions thereof will be omitted. The functions of the elements disclosed in the present description can be executed using a circuit or a processing circuit including a general-purpose processor, a dedicated processor, an integrated circuit, an application specific integrated circuit (ASIC), a circuit in the related art, and/or a combination thereof implemented or programmed to execute the disclosed functions. The processor includes a transistor and other circuits, and thus is regarded as a processing circuit or a circuit. In the present disclosure, the circuit, a unit, and a means are hardware that executes the listed functions or hardware that is programmed to execute the listed functions. The hardware may be hardware disclosed in the present description, or another known hardware implemented or programmed to execute the listed functions. When the hardware is a processor considered as a kind of circuit, the circuit, the means, or the unit is a combination of hardware and software, and the software is used for the hardware and/or processor.

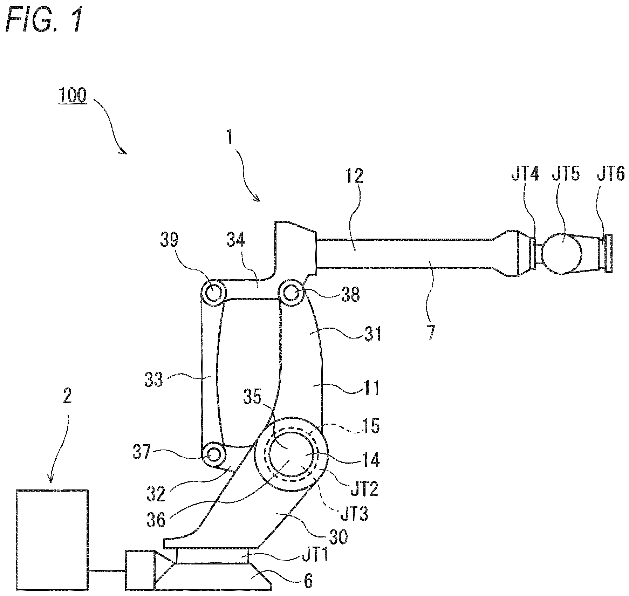

FIG. 1 is a diagram showing a configuration example of a robot system 100 including a deflection amount estimation device according to the embodiment. As shown in FIG. 1, the robot system 100 includes a robot body 1 and a robot controller 2.

[Configuration Example of Robot Body]

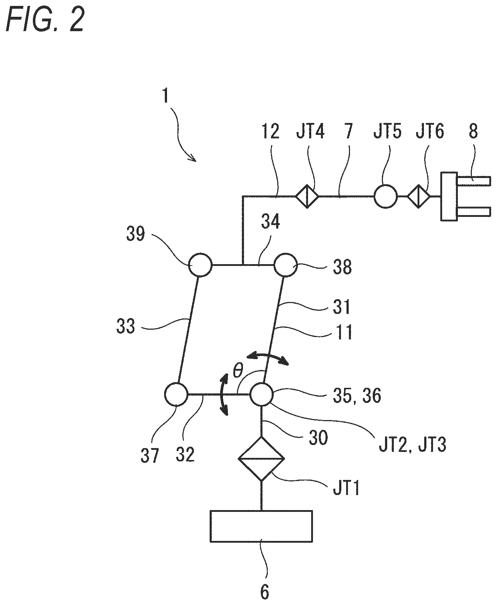

FIG. 2 is a diagram schematically showing a configuration example of the robot body 1. As shown in FIG. 2, the robot body 1 is an articulated industrial robot. In addition, the robot body 1 is a robot that uses a five-bar link structure having a closed loop structure in a lower arm structure supporting an upper arm structure 12 and a hand 8, which will be described later, and is a robot that has high mechanical stiffness and can achieve a stable operation in a high load condition.

The robot body 1 includes a base 6, a robot arm 7, and the hand 8. For example, the base 6 is placed to be fixed on a floor surface, and supports the robot arm 7 and the hand 8.

The robot arm 7 has a structure in which a plurality of links are connected by joints. The robot arm 7 includes the lower arm structure, the upper arm structure 12, a joint drive unit 13, and a first lower arm drive unit 14. The lower arm structure is also referred to as a link structure portion 11, and is connected to the base 6 so as to be pivotable about a pivot axis extending in a vertical direction, for example. A structure connecting the base 6 and the link structure portion 11 refers to a first joint axis JT1. Further, the link structure portion 11 includes a second joint axis JT2 and a third joint axis JT3. The upper arm structure 12 is provided in a continuous manner with the link structure portion 11. Further, the upper arm structure 12 includes a fourth joint axis JT4, a fifth joint axis JT5, and a sixth joint axis JT6. Therefore, the robot arm 7 includes six joint axes in total. Among the six joint axes, the four joint axes excluding the link structure portion 11 are driven by the joint drive unit 13 provided corresponding to the joints, and a link on a distal end side is pivoted about a pivot axis with respect to a link on a proximal end side. Further, the link structure portion 11 is driven by the first lower arm drive unit 14 and a second lower arm drive unit 15. The upper arm structure 12 has a serial link structure, and is configured in the same manner as an upper arm structure of a known vertical articulated 6-axis robot. In the present description, the term "distal end side" means a hand 8 side in a direction in which the robot arm 7 extends, and the term "proximal end side" means a base 6 side.

The link structure portion 11 is a link structure portion that includes a support link 30, a first drive link 31, a second drive link 32, a first driven link 33, a second driven link 34, a first drive shaft 35, a second drive shaft 36, a first connecting shaft 37, a second connecting shaft 38, and a third connecting shaft 39. The support link 30 is connected to the base 6 via a bearing, and is connected to the base 6 so as to be pivotable about the pivot axis. In a basic attitude of the robot body 1, the first drive link 31 and the first driven link 33 extend in the vertical direction, and the second drive link 32 and the second driven link 34 extend in a front-rear direction. Each of the support link 30, the first drive link 31, the second drive link 32, the first driven link 33, and the second driven link 34 includes a first portion and a second portion. In each of the first drive link 31, the second drive link 32, the first driven link 33, and the second driven link 34, the first portion is one end portion, and the second portion is the other end portion. The second driven link 34 is integrally formed with a proximal end portion of the upper arm structure 12 and is continuous therewith.

The first drive shaft 35 is supported by the support link 30 via a bearing, is fixed to the first portion of the first drive link 31, and connects the first portion of the support link 30 and the first portion of the first drive link 31. The second drive shaft 36 is provided coaxially with the first drive shaft 35. Further, the second drive shaft 36 is supported by the support link 30 via the bearing, is fixed to the first portion of the second drive link 32, and connects the second portion of the support link 30 and the first portion of the second drive link 32. The first connecting shaft 37 is supported by one or both of the second portion of the second drive link 32 and the first portion of the first driven link 33 via a bearing, and connects the second portion of the second drive link 32 and the first portion of the first driven link 33 so as to be pivotable. The second connecting shaft 38 is supported by one or both of the second portion of the first drive link 31 and the first portion of the second driven link 34 via a bearing, and connects the second portion of the first drive link 31 and the first portion of the second driven link 34 so as to be pivotable. The third connecting shaft 39 is supported by one or both of the second portion of the first driven link 33 and the second portion of the second driven link 34 via a bearing, and connects the second portion of the first driven link 33 and the second portion of the second driven link 34 so as to be pivotable. Further, axes of the first drive shaft 35, the second drive shaft 36, the first connecting shaft 37, the second connecting shaft 38, and the third connecting shaft 39 extend in a direction orthogonal to the pivot axis and extend parallel to one another. That is, the support link 30 forms a stationary bar in the link structure portion 11. The first drive link 31 and the second drive link 32 form a first drive bar and a second drive bar in the link structure portion 11, respectively. The first driven link 33 and the second driven link 34 form a first driven bar and a second driven bar in the link structure portion 11, respectively. Therefore, the link structure portion 11 is a five-bar link having a closed loop structure in which five links are connected in a ring shape by five rotation pairs, and is a two-degree-of-freedom link mechanism.

In addition, the first drive shaft 35, the second drive shaft 36, the first connecting shaft 37, the second connecting shaft 38, and the third connecting shaft 39 are parallel to one another. A distance between the first drive shaft 35 and the second connecting shaft 38 is equal to a distance between the first connecting shaft 37 and the third connecting shaft 39, and a distance between the second drive shaft 36 and the first connecting shaft 37 is equal to a distance between the second connecting shaft 38 and the third connecting shaft 39. Therefore, the first drive link 31, the second drive link 32, the first driven link 33, and the second driven link 34 of the link structure portion 11 extend to form a substantial parallelogram as viewed in an extension direction of the first drive shaft 35. Further, the first drive link 31 and the second drive link 32 are connected by the support link 30, and as described above, the link structure portion 11 is a five-bar link structure having a closed loop structure.

Further, an interval between the axis of the first drive shaft 35 and the second drive shaft 36 and the axis of the first connecting shaft 37 is the same as an interval between the axis of the second connecting shaft 38 and the axis of the third connecting shaft 39. An interval between the axis of the first drive shaft 35 and the second drive shaft 36 and the axis of the second connecting shaft 38 is the same as an interval between the axis of the first connecting shaft 37 and the axis of the third connecting shaft 39. That is, the link structure portion 11 has a parallel link structure. The first drive link 31 and the first driven link 33 swing with symmetry, and further, the second drive link 32 and the second driven link 34 swing with symmetry. In addition, an opening angle $\theta$, which is an angle formed by the first drive link 31 and the second drive link 32, is configured to be the same as an angle formed by the first driven link 33 and the second driven link 34. Accordingly, the second driven link 34 can maintain an attitude with respect to the second drive link 32. The opening angle $\theta$ as the angle formed by the first drive link 31 and the second drive link 32 is an angle formed by a plane passing through the axis of the first drive shaft 35 and the second drive shaft 36 and the axis of the second connecting shaft 38, and a plane passing through the axis of the first drive shaft 35 and the second drive shaft 36 and the axis of the first connecting shaft 37. Further, the angle formed by the first driven link 33 and the second driven link 34 is an angle formed by a plane passing through the axis of the third connecting shaft 39 and the axis of the second connecting shaft 38, and a plane passing through the axis of the third connecting shaft 39 and the axis of the first connecting shaft 37. Thus, the first drive shaft 35 and the second drive shaft 36, which are coaxial, form a reference axis related to the opening angle $\theta$. The first drive shaft 35 supports the first drive link 31 so as to be pivotable about the reference axis, and the second drive shaft 36 supports the second drive link 32 so as to be pivotable about the reference axis.

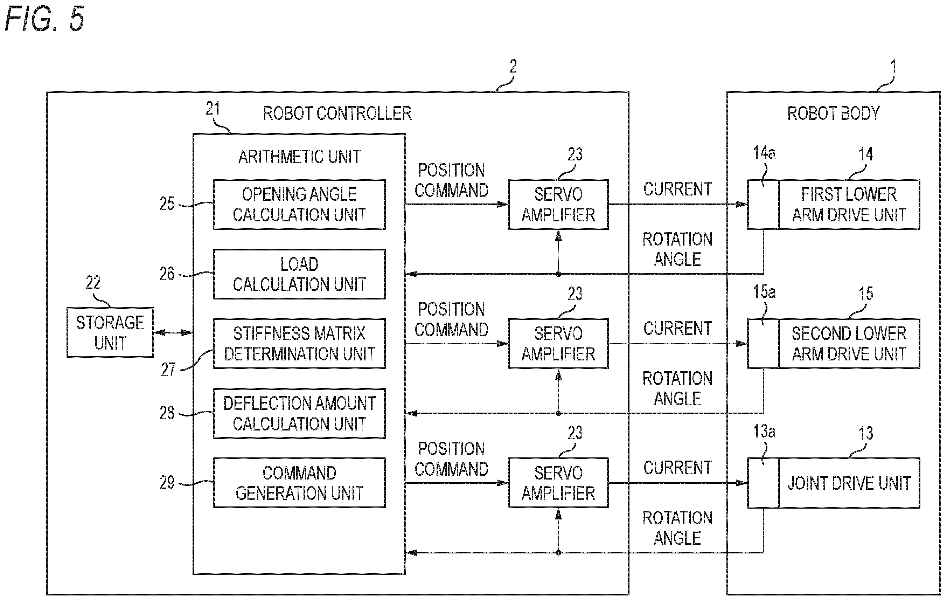

Then, the first lower arm drive unit 14 pivots the first drive shaft 35 by a drive force thereof, and drives the first drive link 31 to swing. Further, the second lower arm drive unit 15 pivots the second drive shaft 36 by a drive force thereof, and drives the second drive link 32 to swing. Each of the first lower arm drive unit 14 and the second lower arm drive unit 15 includes a servo motor attached to the support link 30 and a speed reducer, and output shafts of the servo motors are fixedly connected to the first drive shaft 35 and the second drive shaft 36 via the speed reducers, respectively. Therefore, the first drive link 31 and the second drive link 32 are configured to swing independently of each other. In an extension direction of the axis of the first drive shaft 35 and the second drive shaft 36, the first lower arm drive unit 14 is disposed on one side of the first drive link 31, and the second lower arm drive unit 15 is disposed on the other side of the first drive link 31. Further, the first lower arm drive unit 14 and the second lower arm drive unit 15 include encoders 14a and 15a that detect angle positions of the output shafts of the servo motors, respectively. As shown in FIG. 5, angle position information on the output shafts of the servo motors detected by the encoders 14a and 15a is input to an arithmetic unit 21 and servo amplifiers 23 to be described later in the robot controller 2.

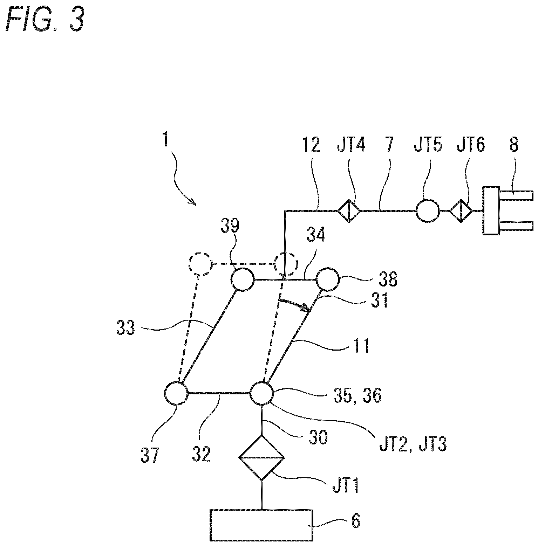

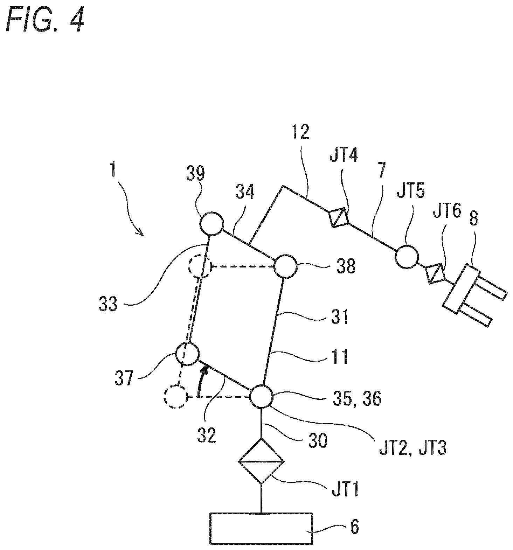

Therefore, as shown in FIG. 3, when the first lower arm drive unit 14 pivots the first drive shaft 35 by the drive force thereof, an end portion of the first drive link 31 on a second connecting shaft 38 side swings in the front-rear direction. Then, by following this operation of the first drive link 31, an end portion of the first driven link 33 on a third connecting shaft 39 side swings in the front-rear direction, and the second driven link 34 mainly moves back and forth in the front-rear direction. The upper arm structure 12 mainly moves back and forth in the front-rear direction, and the hand 8 mainly moves in the front-rear direction. Further, as shown in FIG. 4, when the second lower arm drive unit 15 pivots the second drive shaft 36 by the drive force thereof, an end portion of the second drive link 32 on a first connecting shaft 37 side swings in the vertical direction. Then, by following the second drive link 32, the second driven link 34 swings about the second connecting shaft 38. The upper arm structure 12 pivots about the second connecting shaft 38, and the hand 8 mainly moves in the vertical direction.

[Configuration Example of Robot Controller]

FIG. 5 is a block diagram schematically showing a configuration example of a control system of the robot system 100.

As shown in FIG. 1, the robot controller 2, which is also referred to as a robot control device, is disposed around the robot body 1, and performs position control, speed control, or current control of a control target shaft of the robot body 1. As shown in FIG. 5, the robot controller 2 includes, for example, the arithmetic unit 21 having an arithmetic device such as a CPU, a storage unit 22 having a memory such as a ROM and a RAM, and the plurality of servo amplifiers 23 provided corresponding to respective servo motors of the first lower arm drive unit 14, the second lower arm drive unit 15, and the joint drive unit 13. Further, the robot controller 2 estimates a deflection amount $\delta$ of the link structure portion 11, that is, displacement amounts of a position and an attitude of the second driven link 34 with respect to the support link 30 caused by the deflection of the link structure portion 11. The robot controller 2 may be implemented by a single controller that performs centralized control, and may be implemented by a plurality of controllers that cooperate together to perform distributed control.

The arithmetic unit 21 includes an opening angle calculation unit 25, a load calculation unit 26, a stiffness matrix determination unit 27, a deflection amount calculation unit 28, and a command generation unit 29. The opening angle calculation unit 25, the load calculation unit 26, the stiffness matrix determination unit 27, and the deflection amount calculation unit 28 constitute the deflection amount estimation device. These functional units 25 to 29 are functional blocks implemented by the arithmetic unit 21 executing a predetermined control program stored in the storage unit 22. At least one predetermined control program is stored in the storage unit 22, and the arithmetic unit 21 reads and executes the control program to control an operation of the robot body 1. Further, a stiffness value decision function to be described later is stored in the storage unit 22.

The deflection amount estimation device is a device that estimates a dynamic deflection amount of the link structure portion 11 caused by a dynamic load generated by acceleration and deceleration of the robot arm 7 when the robot arm 7 is operated. Specifically, the deflection amount estimation device is a device that estimates a displacement amount of a proximal end, that is, a distal end with respect to the support link 30 of the link structure portion 11, that is, the displacement amounts of the position and the attitude of the second driven link 34.

The servo amplifiers 23 controls the corresponding servo motors. That is, for example, in the position control, each servo amplifier 23 performs track-following control of the servo motor so that a deviation between a current position and the angle position of the output shaft of the servo motor determined based on a position command value generated by the command generation unit 29 is set to 0.

[Operation Example]

Next, an operation example related to a deflection amount estimation operation of the robot system 100 will be described.

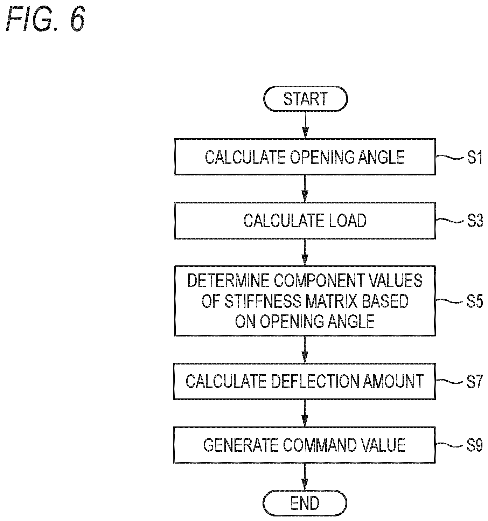

FIG. 6 is a flowchart showing the operation example related to the deflection amount estimation operation of the robot system 100.

First, in step S1, the opening angle calculation unit 25 calculates the opening angle $\theta$ that is an angle formed by the first drive link 31 as one link of the link structure portion 11 pivoting about the reference axis formed by the first drive shaft 35 and the second drive shaft 36, which is an axis of one rotation pair of the link structure portion 11, and the second drive link 32 as another link of the link structure portion 11 pivoting about the reference axis. Specifically, the opening angle calculation unit 25 calculates the opening angle $\theta$, which is the angle formed by the first drive link 31 and the second drive link 32, based on the angle position information on the output shaft of the servo motor that drives the first drive link 31 and the angle position information on the output shaft of the servo motor that drives the second drive link 32. The angle position information on the output shaft of the servo motor that drives the first drive link 31 is detected by the encoder 14a of the first lower arm drive unit 14, and the angle position information on the output shaft of the servo motor that drives the second drive link 32 is detected by the encoder 15a of the second lower arm drive unit 15. An angle formed by two links connected at the first connecting shaft 37, the second connecting shaft 38, or the third connecting shaft 39 may be the opening angle.

Next, in step S3, the load calculation unit 26 calculates a load subjected to the link structure portion 11. In the present embodiment, the load subjected to the link structure portion 11 is a dynamic load subjected to the link structure portion 11 in accordance with acceleration and deceleration of the links during an operation of the robot arm 7. The load calculation unit 26 handles a load amount with signs, for example, the load amount is handled such that a positive (+) load is generated by accelerating the links at the start of the swing of the robot arm 7, and a negative (-) load is generated by decelerating the links at the end of the swing.

Next, in step S5, the stiffness matrix determination unit 27 determines stiffness values that are values of components of a stiffness matrix (rigidity matrix) C corresponding to the opening angle $\theta$. The stiffness matrix C is a $6 \times 6$ symmetric matrix that associates a load w subjected to the link structure portion 11 with the deflection amount $\delta$ of the link structure portion 11, and includes 36 components $c_{11}$ to $c_{66}$ shown in the following Formula (1). The load w includes forces in six directions of a force and a moment, and is a wrench.
[Formula 1]

$$C = \begin{bmatrix} c_{11} & c_{12} & c_{13} & c_{14} & c_{15} & c_{16} \\ c_{21} & c_{22} & c_{23} & c_{24} & c_{25} & c_{26} \\ c_{31} & c_{32} & c_{33} & c_{34} & c_{35} & c_{36} \\ c_{41} & c_{42} & c_{43} & c_{44} & c_{45} & c_{46} \\ c_{51} & c_{52} & c_{53} & c_{54} & c_{55} & c_{56} \\ c_{61} & c_{62} & c_{63} & c_{64} & c_{65} & c_{66} \end{bmatrix} \dots (1)$$

The stiffness matrix determination unit 27 determines the stiffness value by using a stiffness value decision function individually defined for each of the 36 components $c_{11}$ to $c_{66}$. If symmetric components are excluded from the 36 components $c_{11}$ to $c_{66}$, there are 21 components.

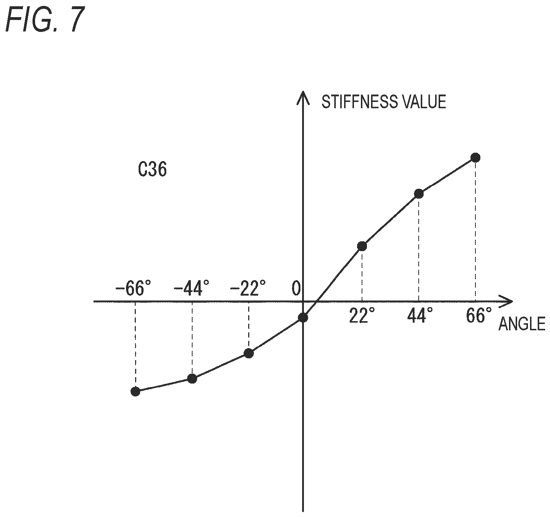

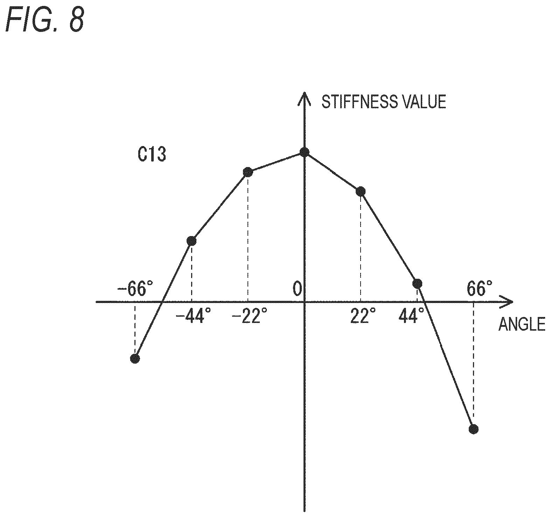

The stiffness value decision function is a function representing a correlation between the stiffness value and the opening angle $\theta$ of the link structure portion 11, and is calculated by analysis using a finite element method (FEM). That is, first, stiffness values respectively corresponding to a plurality of different opening angles $\theta$ are acquired in advance by the analysis. Specifically, an angle of the first drive link 31 in a vertically extending state is set to 0°, the angle thereof in a state of being inclined forward is set to be positive, and the angle thereof in a state of being inclined rearward is set to be negative. In addition, an angle of the second drive link 32 in a horizontally extending state is set to 0°, the angle thereof in a state of being inclined upward is set to be negative, and the angle thereof in a state of being inclined rearward is set to be positive. The sum of the angle of the first drive link 31 and the angle of the second drive link 32 is defined as the opening angle $\theta$. For example, a stiffness value is acquired for each of states in which the opening angle $\theta$ is - 66°, - 44°, - 22°, 0°, 22°, 44°, and 66°. The stiffness values corresponding to the plurality of opening angles $\theta$ acquired by the analysis are linearly interpolated. Then, a linearly interpolated function is used as the stiffness value decision function. FIG. 7 shows an example of a stiffness value decision function related to the $c_{36}$ component. FIG. 8 shows an example of a stiffness value decision function related to the $c_{13}$ component. Further, a sampling interval at which the stiffness value is acquired by the finite element method is set such that the trend of changes in the stiffness value is indicated by linear interpolation, and as shown in FIGs. 7 and 8, the trend of the changes in the stiffness value can be acquired by acquiring the stiffness values at an interval of, for example, 22°.

Next, in step S7, the deflection amount calculation unit 28 calculates the deflection amount $\delta$ of the link structure portion 11 based on the load subjected to the link structure portion 11, which is calculated by the load calculation unit 26, and the stiffness matrix C determined based on the stiffness value, which is determined by the stiffness matrix determination unit 27. That is, the deflection amount calculation unit 28 calculates the deflection amount $\delta$ by using a function of the following Equation (2).
[Formula 2]

$$\delta = Cw \ \dots (2)$$

Here, $w = [f_x \ f_y \ f_z \ m_x \ m_y \ m_z]^T$, where $f_x$, $f_y$, and $f_z$ are components of force F for each x, y, and z direction, and $m_x$, $m_y$, and $m_z$ are components of moment M around each x, y, and z axis.

It is noted that generally, in a serial link, a relation between the load w and the deflection amount $\delta$ has linearity. However, in the link structure portion 11, as shown in FIGs. 7 and 8, the relation between the load w and the deflection amount $\delta$ has non-linearity, and the stiffness matrix C has, as the components, stiffness values that are mutually different depending on the opening angle $\theta$ and indicates the trend of changes, and thus it was difficult to estimate the deflection amount $\delta$. However, the deflection amount estimation device of the robot system 100 quickly estimates the deflection amount $\delta$ of the link structure portion 11 by using the stiffness matrix C having the stiffness values $c_{11}$ to $c_{66}$ determined based on the opening angle $\theta$ as the components. Therefore, for example, as compared with a case in which equations each representing the relation between the load w and

the deflection amount $\delta$ for each link are taken as simultaneous equations and solved, a calculation amount can be reduced, and the deflection amount $\delta$ can be calculated quickly. Therefore, an operation speed of the robot body 1 can be improved. As represented by Equation (2), in the estimation of the dynamic deflection amount $\delta$, a gravity component has a minor effect, and thus the effect of the gravity component is ignored.

Next, in step S7, the command generation unit 29 generates a command value based on an operation program. When generating the command value, the command generation unit 29 calculates a compensation amount corresponding to the dynamic deflection amount $\delta$ of the link structure portion 11 calculated by the deflection amount calculation unit 28. The compensation amount is an amount proportional to acceleration of the link structure portion 11, and the compensation amount at the start of the swing and the compensation amount at the end of the operation have opposite signs. Therefore, it is possible to restrain a vibration of the robot arm 7 due to the acceleration and deceleration of the robot arm 7.

As described above, the deflection amount estimation device quickly estimates the deflection amount $\delta$ of the two-degree-of-freedom link structure portion 11 by using the stiffness matrix C having the stiffness values $c_{11}$ to $c_{66}$ determined based on the opening angle $\theta$ as the components. Accordingly, the calculation amount can be reduced, and the deflection amount $\delta$ can be quickly calculated. Therefore, the operation speed of the robot body 1 can be improved.

<Modifications>

In the above embodiment, the deflection amount estimation device estimates the dynamic deflection amount $\delta$. Instead of estimating the dynamic deflection amount $\delta$, the deflection amount estimation device may calculate a static load by the load calculation unit 26, and may estimate, based on a relation between the static load and a static deflection amount, the static deflection amount by the deflection amount calculation unit 28.

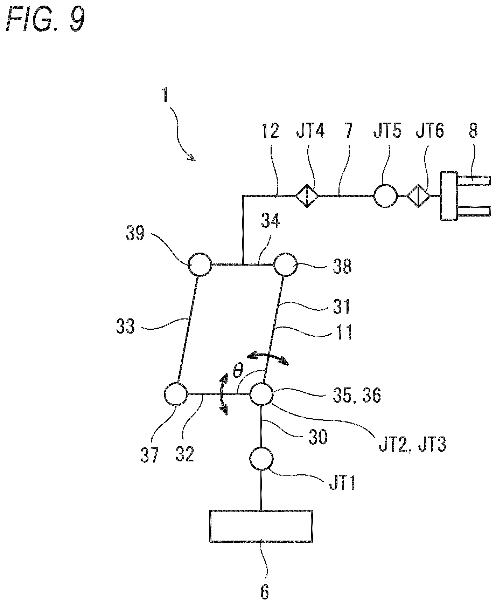

In addition, in the above embodiment, the first joint axis JT1 connects the lower arm structure and the base 6 so as to be pivotable about the pivot axis extending in the vertical direction. Alternatively, as shown in FIG. 9, a first joint axis JT1 may connect the lower arm structure and the base 6 so as to be pivotable about a bend axis extending in a horizontal direction. Even when an attitude of the lower arm structure with respect to the base 6 and a ground panel of the robot body 1 changes by a bending operation at the first joint axis JT1, the robot system 100 can estimate the deflection amount $\delta$ of the link structure portion 11.

From the above description, many improvements and other embodiments of the present invention will be apparent to those skilled in the art. Accordingly, the above description is to be construed as illustrative only, and is provided for the purpose of teaching those skilled in the art the best mode of carrying out the present invention. The details of the structure and/or function of the above description can be varied substantially without departing from the spirit of the present invention.

(List of Embodiments)

Embodiment 1: A deflection amount estimation device for estimating a deflection amount $\delta$ of a two-degree-of-freedom link structure portion 11 including a plurality of rotation pairs of a robot arm 7 in which a plurality of links including the link structure portion 11 are connected by joints, the deflection amount estimation device includes:

an opening angle calculation unit 25 configured to calculate an opening angle $\theta$ that is an angle formed by one link 31 of the link structure portion 11 pivoting about a reference axis as an axis of one rotation pair of the link structure portion 11, and another link 32 of the link structure portion 11 pivoting about the reference axis;
a load calculation unit 26 configured to calculate a load to which the link structure portion 11 receives;
a stiffness matrix determination unit 27 configured to determine, by using a stiffness value decision function representing a correlation between a stiffness value, which is a value of each of components $c_{11}$ to $c_{66}$ of a stiffness matrix C that associates the load to which the link structure portion 11 receives with the deflection amount $\delta$ of the link structure portion 11, and the opening angle $\theta$ of the link structure portion 11, the stiffness value corresponding to the opening angle $\theta$ of the link structure portion 11 calculated by the opening angle calculation unit 25; and
a deflection amount calculation unit 28 configured to calculate the deflection amount $\delta$ of the link structure portion 11 based on the load which is calculated by the load calculation unit 26 and to which the link structure portion 11 receives, and the stiffness matrix C having the stiffness values $c_{11}$ to $c_{66}$ determined by the stiffness matrix determination unit 27 as the components.

According to Embodiment 1, it is possible to estimate the deflection amount $\delta$ of the link structure portion 11. In addition, since the link structure portion 11 can have a plurality of degrees of freedom, the structure of the robot arm 7 on the distal end side of the link structure portion 11 can be simplified. Further, the deflection amount $\delta$ of the link structure portion 11 can be quickly estimated by using the stiffness matrix C having the stiffness values $c_{11}$ to $c_{66}$ determined based on the opening angle $\theta$ as the components. Accordingly, the calculation amount in the calculation of the deflection amount $\delta$ can be reduced, and the deflection amount $\delta$ can be quickly calculated.

Embodiment 2: in the deflection amount estimation device according to Embodiment 1, the link structure portion 11 is a five-bar link having a closed loop structure.

According to Embodiment 2, it is possible to quickly calculate the deflection amount δ of the five-bar link having a closed loop structure.

Embodiment 3: in the deflection amount estimation device according to Embodiment 1 or Embodiment 2,

the link structure portion 11 includes a first drive link 31 that is the one link, a second drive link 32 that is the another link, a first driven link 33, a second driven link 34, a first drive shaft 35 that supports the first drive link 31 so as to be pivotable about the reference axis, a second drive shaft 36 that supports the second drive link 32 so as to be pivotable about the reference axis, a first connecting shaft 37 that connects the second drive link 32 and the first driven link 33 so as to be pivotable, a second connecting shaft 38 that connects the first drive link 31 and the second driven link 34 so as to be pivotable, a third connecting shaft 39 that connects the first driven link 33 and the second driven link 34 so as to be pivotable, and
the deflection amount estimation device further includes a first drive unit 14 configured to drive the first drive link 31 to swing about the first drive shaft 35, and a second drive unit 15 configured to drive the second drive link 32 to swing about the second drive shaft 36.

According to Embodiment 3, it is possible to swing the link structure portion 11 in a plurality of directions, and it is possible to reduce the number of joints connected to a distal end of the robot arm 7.

Embodiment 4: in the deflection amount estimation device according to Embodiment 3,

the link structure portion 11 further includes a support link 30,
the first drive shaft 35 connects the support link 30 and the first drive link 31 so as to be pivotable about the reference axis, and
the second drive shaft 36 connects the support link 30 and the second drive link 32 so as to be pivotable about the reference axis.

Embodiment 5: in the deflection amount estimation device according to Embodiment 3,

the first drive shaft 35, the second drive shaft 36, the first connecting shaft 37, the second connecting shaft 38, and the third connecting shaft 39 are parallel to one another,
a distance between the first drive shaft 35 and the second connecting shaft 38 is equal to a distance between the first connecting shaft 37 and the third connecting shaft 39, and
a distance between the second drive shaft 36 and the first connecting shaft 37 is equal to a distance between the second connecting shaft 38 and the third connecting shaft 39.

According to Embodiment 5, it is possible to more accurately estimate the deflection amount δ of the link structure portion 11.

Embodiment 6: in the deflection amount estimation device according to any one of Embodiment 1 to Embodiment 3,
the stiffness value decision function is a function obtained by acquiring the respective stiffness values corresponding to a plurality of the opening angles θ different from one another in advance by analysis, and linearly interpolating the stiffness values acquired by the analysis and corresponding to the plurality of opening angles θ.

According to Embodiment 6, the calculation amount in the calculation of the deflection amount δ can be further reduced, and the deflection amount δ can be quickly calculated.

Embodiment 7: a deflection amount estimation device includes:

a memory storing at least one program; and
a processor configured to calculate, by executing the at least one program, an estimated deflection amount of a two-degree-of-freedom link structure portion 11 including a plurality of rotation pairs of a robot arm 7 in which a plurality of links including the link structure portion 11 are connected by joints, in which
the processor executes:

an opening angle calculation process of calculating an opening angle that is an angle formed by one link of the link structure portion 11 pivoting about a reference axis as an axis of one rotation pair of the link structure portion 11, and another link of the link structure portion 11 pivoting about the reference axis;
a load calculation process of calculating a load to which the link structure portion 11 receives;
a stiffness matrix determination process of determining, by using a stiffness value decision function representing a correlation between a stiffness value, which is a value of each of components $c_{11}$ to $c_{66}$ of a stiffness matrix that associates the load to which the link structure portion 11 receives with the deflection amount of the link structure portion 11, and the opening angle θ of the link structure portion 11, the stiffness value corresponding to the opening angle θ of the link structure portion 11 calculated by the opening angle calculation process; and
a deflection amount calculation process of calculating the deflection amount δ of the link structure portion 11 based on the load which is calculated by the load calculation process and to which the link structure portion 11 receives, and the stiffness matrix C having the stiffness values $c_{11}$ to $c_{66}$ determined by the stiffness matrix determination process as the components.

According to Embodiment 7, it is possible to estimate the deflection amount $\delta$ of the link structure portion 11. In addition, since the link structure portion 11 can have a plurality of degrees of freedom, the structure of the robot arm can be simplified. Further, the deflection amount $\delta$ of the link structure portion 11 can be quickly estimated by using the stiffness matrix C having the stiffness values $c_{11}$ to $c_{66}$ determined based on the opening angle $\theta$ as the components. Accordingly, the calculation amount in the calculation of the deflection amount $\delta$ can be reduced, and the deflection amount $\delta$ can be quickly calculated.

Embodiment 8: a robot control device provided with the deflection amount estimation device according to any one of Embodiment 1 to Embodiment 7.

According to Embodiment 8, the deflection amount $\delta$ of the link structure portion 11 can be quickly estimated by using the stiffness matrix C having the stiffness values $c_{11}$ to $c_{66}$ determined based on the opening angle $\theta$ as the components. Accordingly, the calculation amount can be reduced, and the deflection amount $\delta$ can be quickly calculated. Therefore, the operation speed of the robot body 1 can be improved.

Embodiment 9: a deflection amount estimation method for detecting a deflection amount $\delta$ of a two-degree-of-freedom link structure portion 11 including a plurality of rotation pairs of a robot arm 7 in which a plurality of links including the link structure portion 11 are connected by joints, the deflection amount estimation method includes:

calculating an opening angle $\theta$ that is an angle formed by one link 31 of the link structure portion 11 pivoting about a reference axis as an axis of one rotation pair of the link structure portion 11, and another link 32 of the link structure portion 11 pivoting about the reference axis;

calculating a load to which the link structure portion 11 receives;

determining, by using a stiffness value decision function representing a correlation between a stiffness value, which is a value of each of components of a stiffness matrix C that associates the load to which the link structure portion 11 receives with the deflection amount $\delta$ of the link structure portion 11, and the opening angle $\theta$ of the link structure portion 11, the stiffness value corresponding to the calculated opening angle $\theta$ of the link structure portion 11; and

calculating the deflection amount $\delta$ of the link structure portion 11 based on the calculated load to which the link structure portion 11 receives and the stiffness matrix C having the determined stiffness values $c_{11}$ to $c_{66}$ as the components.

According to Embodiment 9, it is possible to estimate the deflection amount $\delta$ of the link structure portion 11. In addition, since the link structure portion 11 can have a plurality of degrees of freedom, the structure of the robot arm can be simplified. Further, the deflection amount $\delta$ of the link structure portion 11 can be quickly estimated by using the stiffness matrix C having the stiffness values $c_{11}$ to $c_{66}$ determined based on the opening angle $\theta$ as the components. Accordingly, the calculation amount in the calculation of the deflection amount $\delta$ can be reduced, and the deflection amount $\delta$ can be quickly calculated.

REFERENCE SIGNS LIST

1: robot body
2: robot controller
6: base
7: robot arm
8: hand
11: link structure portion
12: upper arm structure
13: joint drive unit
13a: encoder
14: first lower arm drive unit
14a: encoder
15: second lower arm drive unit
15a: encoder
21: arithmetic unit
22: storage unit
23: servo amplifier
25: opening angle calculation unit
26: load calculation unit
27: stiffness matrix determination unit
28: deflection amount calculation unit
29: command generation unit
30: support link
31: first drive link
32: second drive link
33: first driven link
34: second driven link
35: first drive shaft
36: second drive shaft
37: first connecting shaft
38: second connecting shaft
39: third connecting shaft
100: robot system

**Claims**

1. A deflection amount estimation device for estimating a deflection amount of a two-degree-of-freedom link structure portion including a plurality of rotation pairs of a robot arm in which a plurality of links including the link structure portion are connected by joints, comprising:

an opening angle calculation unit configured to calculate an opening angle that is an angle formed by one link of the link structure portion pivoting about a reference axis which is an axis of one rotation pair of the link structure portion, and another link of the link structure portion pivoting about the reference axis;

a load calculation unit configured to calculate a load to which the link structure portion receives;

a stiffness matrix determination unit configured to determine, by using a stiffness value decision function representing a correlation between a stiffness value and the opening angle of the link structure portion, the stiffness value corresponding to the opening angle of the link structure portion calculated by the opening angle calculation unit, the stiffness value being a value of each of components of a stiffness matrix that associates the load to which the link structure portion receives with the deflection amount of the link structure portion; and

a deflection amount calculation unit configured to calculate the deflection amount of the link structure portion based on the load which is calculated by the load calculation unit and to which the link structure portion receives, and the stiffness matrix having the stiffness values determined by the stiffness matrix determination unit as the components.

2. The deflection amount estimation device according to claim 1, wherein
the link structure portion is a five-bar link having a closed loop structure.

3. The deflection amount estimation device according to claim 1, wherein

the link structure portion includes:

a first drive link that is the one link;
a second drive link that is the another link;
a first driven link;
a second driven link;
a first drive shaft that supports the first drive link to be pivotable about the reference axis;
a second drive shaft that supports the second drive link to be pivotable about the reference axis;
a first connecting shaft that connects the second drive link and the first driven link to be pivotable;
a second connecting shaft that connects the first drive link and the second driven link to be pivotable; and
a third connecting shaft that connects the first driven link and the second driven link to be pivotable; and

the deflection amount estimation device further comprises:

a first drive unit configured to drive the first drive link to swing about the first drive shaft; and
a second drive unit configured to drive the second drive link to swing about the second drive shaft.

4. The deflection amount estimation device according to claim 3, wherein

the link structure portion further includes a support link,
the first drive shaft connects the support link and the first drive link to be pivotable about the reference axis, and
the second drive shaft connects the support link and the second drive link to be pivotable about the reference axis.

5. The deflection amount estimation device according to claim 3, wherein

the first drive shaft, the second drive shaft, the first connecting shaft, the second connecting shaft, and the third connecting shaft are parallel to one another,
a distance between the first drive shaft and the second connecting shaft is equal to a distance between the first connecting shaft and the third connecting shaft, and
a distance between the second drive shaft and the first connecting shaft is equal to a distance between the second connecting shaft and the third connecting shaft.

6. The deflection amount estimation device according to claim 1, wherein
the stiffness value decision function is a function obtained by acquiring the respective stiffness values corresponding to a plurality of the opening angles different from one another in advance by analysis, and linearly interpolating the stiffness values acquired by the analysis and corresponding to the plurality of opening angles.

7. A deflection amount estimation device, comprising:

a memory storing at least one program; and
a processor configured to calculate, by executing the at least one program, an estimated deflection amount of a two-degree-of-freedom link structure portion including a plurality of rotation pairs of a robot arm in which a plurality of links including the link structure portion are connected by joints, wherein
the processor executes:

an opening angle calculation process of calculating an opening angle that is an angle formed by one link of the link structure portion pivoting about a reference axis which is an axis of one rotation pair of the link structure portion, and another link of the link structure portion pivoting about the reference axis;

a load calculation process of calculating a load to which the link structure portion receives;

a stiffness matrix determination process of determining, by using a stiffness value decision function representing a correlation between a stiffness value and the opening angle of the link structure portion, the stiffness value corresponding to the opening angle of the link structure portion calculated by the opening angle calculation process, the stiffness value being a value of each of components of a stiffness matrix that associates the load to which the link structure portion receives with the deflection amount of the link structure portion; and

a deflection amount calculation process of calculating the deflection amount of the link structure portion based on the load which is calculated by the load calculation process and to which the link structure portion receives, and the stiffness matrix having the stiffness values determined by the stiffness matrix determination process as the components.

8. A robot control device, comprising
the deflection amount estimation device according to any one of claims 1 to 7.

9. A deflection amount estimation method for detecting a deflection amount of a two-degree-of-freedom link structure portion including a plurality of rotation pairs of a robot arm in which a plurality of links including the link structure portion are connected by joints, comprising:

calculating an opening angle that is an angle formed by one link of the link structure portion pivoting about a reference axis which is an axis of one rotation pair of the link structure portion, and another link of the link structure portion pivoting about the reference axis;

calculating a load to which the link structure portion receives;

determining, by using a stiffness value decision function representing a correlation between a stiffness value and the opening angle of the link structure portion, the stiffness value corresponding to the calculated opening angle of the link structure portion, the stiffness value being a value of each of components of a stiffness matrix that associates the load to which the link structure portion receives with the deflection amount of the link structure portion; and

calculating the deflection amount of the link structure portion based on the calculated load to which the link structure portion receives and the stiffness matrix having the determined stiffness values as the components.

FIG. 1

FIG. 2

FIG. 3

FIG. 4

FIG. 5

*FIG. 6*

```
        ┌─────────────┐
        │    START    │
        └──────┬──────┘
               │
   ┌───────────▼───────────┐
   │ CALCULATE OPENING ANGLE│ ～S1
   └───────────┬───────────┘
               │
   ┌───────────▼───────────┐
   │    CALCULATE LOAD      │ ～S3
   └───────────┬───────────┘
               │
   ┌───────────▼───────────┐
   │ DETERMINE COMPONENT    │
   │ VALUES OF STIFFNESS    │ ～S5
   │ MATRIX BASED ON        │
   │ OPENING ANGLE          │
   └───────────┬───────────┘
               │
   ┌───────────▼───────────┐
   │ CALCULATE DEFLECTION   │ ～S7
   │ AMOUNT                 │
   └───────────┬───────────┘
               │
   ┌───────────▼───────────┐
   │ GENERATE COMMAND VALUE │ ～S9
   └───────────┬───────────┘
               │
        ┌──────▼──────┐
        │     END     │
        └─────────────┘
```

FIG. 7

*FIG. 8*

FIG. 9

## INTERNATIONAL SEARCH REPORT

International application No.

**PCT/JP2023/021043**

### A. CLASSIFICATION OF SUBJECT MATTER

***B25J 13/00***(2006.01)i
FI: B25J13/00 Z

According to International Patent Classification (IPC) or to both national classification and IPC

### B. FIELDS SEARCHED

Minimum documentation searched (classification system followed by classification symbols)

B25J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 6-320449 A (NISSAN MOTOR CO., LTD.) 22 November 1994 (1994-11-22) | 1-9 |
| A | JP 2016-515906 A (SABANCI UNIV.) 02 June 2016 (2016-06-02) | 1-9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021043**

| Patent document cited in search report | | | Publication date (day/month/year) | Patent family member(s) | | | Publication date (day/month/year) |
|---|---|---|---|---|---|---|---|
| JP | 6-320449 | A | 22 November 1994 | (Family: none) | | | |
| JP | 2016-515906 | A | 02 June 2016 | WO | 2014/167099 | A1 | |
| | | | | US | 2016/0051433 | A1 | |
| | | | | EP | 2789430 | A1 | |

Form PCT/ISA/210 (patent family annex) (January 2015)

**REFERENCES CITED IN THE DESCRIPTION**

**Patent documents cited in the description**

- JP 2019195892 A